# EUROPÄISCHE PATENTANMELDUNG

(11) **EP 0 847 963 A2**
(43) Veröffentlichungstag der Anmeldung: **17.06.1998**
(21) Anmeldenummer: 97114054.6
(22) Anmeldetag: 14.08.1997
(51) Int. Cl.: C02F 3/12, C02F 3/30

(54) **Verfahren zum Betrieb einer zwei-stufigen Reinigungsanlage für die Reinigung von kommunal-gewerblichem Abwasser und Anlage für die Durch-führung eines solchen Verfahrens**

(30) Priorität: 13.12.1996 DE 19651870; 13.12.1996 DE 19651871
(71) Anmelder: Böhnke, Botho, Prof. Dr.-Ing. Dr. h.c. mult., 52074 Aachen (DE)
(72) Erfinder: Böhnke, Botho, 52074 Aachen (DE); Dohmann, Max, 52134 Herzogenrath (DE); Schroeter, Ingulf, 70192 Stuttgart (DE)
(74) Vertreter: Masch, Karl Gerhard, Dr.

(57) **Zusammenfassung**

Verfahren zum Betrieb einer zweistufigen Reinigungsanlage für die Reinigung von kommunal-gewerblichem Abwasser mit Rohabwasser-Zulauf und Belebtschlammabzug. Die Reinigungsanlage weist eine biologische Hochlastbelebungsstufe und eine nachgeschaltete biologisch intensivierte Filterstufe sowie einen Ablauf für das behandelte Abwasser auf. Die biologisch intensivierte Filterstufe wird mit einer vorgeschalteten Denitrifikationsstufe betrieben.

## Beschreibung

Die Erfindung betrifft ein Verfahren zum Betrieb einer zweistufigen Reinigungsanlage für die Reinigung von kommunal-gewerblichem Abwasser mit Rohabwasser-Zulauf und Belebtschlammabzug sowie einem Ablauf für das behandelte Abwasser.

Die Erfindung betrifft fernerhin eine Anlage für die Reinigung von kommunal-gewerblichem Abwasser die für den erfindungsgemäßen Betrieb eingerichtet ist. - Bei einem bekannten Verfahren der eingangs genannten Art, von der die Erfindung ausgeht (Katsumi Nomura, "Entwicklung und Optimierung einer Verfahrenskombination aus mittel- und hochbelasteter Belebung und biologisch intensiv wirkender Filtration mit hoher Leistungsfähigkeit auf kleinstem Raum", Dissertation TH Aachen, 1988, Seiten 183 bis 187) wird mit einer mittel- bis hochbelasteten Belebungsstufe gearbeitet, der eine biologisch intensivierte Filterstufe nachgeschaltet ist. Die biologische Tätigkeit wird durch eine Sauerstoffversorgung des Filterbettes der Filterstufe gewährleistet. Ein Teilstrom des in der Filterstufe behandelten und ablaufenden Abwassers wird bei dem bekannten Verfahren in die Filterstufe zurückgeführt. Hierdurch wird die Reinigungsleistung dieser Filterstufe gesteigert und somit kann der Raumbedarf der für das Verfahren eingesetzten Anlage reduziert werden. Ein Denitrifikationsreaktor ist im Rahmen des bekannten Verfahrens nicht vorgesehen. Im übrigen ist die mit dem bekannten Verfahren erreichte Stickstoff-Reduzierung bzw. -Eliminierung in der Filterstufe unbefriedigend.

Im übrigen ist eine zweistufige Belebungsanlage (sog. A-B-Anlage) aus der Literaturstelle DE-PS 40 36 548 bekannt. Die Hochlastbelebungsstufe (A-Stufe) wird als Adsorptionsstufe mit einer Schlammbelastung von mindestens 2 kg BSB₅ pro kg Trockensubstanz und Tag aerob oder fakultativ anaerob mit zumindest 500 x 10⁵ Prokaryontenkeimen im cm² betrieben. In dieser A-Stufe findet in erster Linie eine Kohlenstoffelimination statt, wobei wegen der hohen Schlammproduktion auch Phosphor und Stickstoff eliminiert werden. In einem gewissen Ausmaß findet auch eine Denitrifikation statt. Die zweite Reinigungsstufe ist bei dieser bekannten Anlage als klassische Belebungsstufe ausgeführt, die als belüftete Stufe mit einer Schlammbelastung von unter 0,15 kg BSB₅ pro kg Trockensubstanzen und Tag betrieben wird. Außerdem ist eine Rezirkulation von Schlamm aus der Nachklärung vorgesehen. Der Schlamm wird zumindest teilweise in die Adsorptionsstufe wieder eingeführt und zwar mit der Maßgabe, daß die Menge des in der Adsorptionsstufe wieder eingeführten Schlammes den Betrieb der ersten Belebungsstufe als Adsorptionsstufe nicht störend beeinträchtigt. Im Ergebnis zeichnet sich diese bekannte Anlage durch einen verhältnismäßig hohen Raumbedarf aus.

Grundsätzlich verlangt die Rahmen-Abwasser-Verwaltungsordnung eine sehr weitgehende Reinigung des Abwassers, die in konventionellen Kläranlagen einen hohen Raum- bzw. Flächenbedarf erfordert. Für Kläranlagen mit größeren Anschlußwerten als 100.000 Einwohnergleichwerten (EW) werden in der Bundesrepublik Deutschland als Ablaufgrenzwert für anorganischen Stickstoff N_{anorganisch} ≤ 18 mg/l verlangt. Die europäische Richtlinie fordert für empfindliche Gebiete einen Ablaufgrenzwert für N_{ges} < 10 gm/l bei mehr als 100.000 EW. Eine solche Reinigungsleistung erfordert einen sehr hohen Raumbedarf für die herkömmlichen Kläranlagen.

Der Erfindung liegt das technische Problem zugrunde, eine Anlage des eingangs beschriebenen Aufbaus so zu betreiben, daß eine ausreichende Stickstoff-Eliminierung erreicht wird und zugleich der Raumbedarf für die Anlage reduziert wird.

Zur Lösung dieses technischen Problems ist Gegenstand der Erfindung ein Verfahren zum Betrieb einer zweistufigen Reinigungsanlage für die Reinigung von kommunalgewerblichem Abwasser mit Rohabwasser-Zulauf und Belebtschlammabzug, welche Reinigungsanlage eine biologische Hochlastbelebungsstufe und eine nachgeschaltete biologisch intensivierte Filterstufe sowie einen Ablauf für das behandelte Abwasser aufweist, wobei die biologisch intensivierte Filterstufe mit einer vorgeschalteten Denitrifikationsstufe betrieben wird. - Im Rahmen der Erfindung wird die Hochlastbelebungsstufe als Adsorptionsstufe betrieben und der Adsorptionsstufe ist zweckmäßigerweise eine Zwischenklärstufe nachgeschaltet. Vorzugsweise wird die biologisch intensivierte Filterstufe mit einer der Denitrifikationsstufe nachgeschalteten Nitrifikationsstufe betrieben. Nach bevorzugter Ausführungsform, der im Rahmen der Erfindung besondere Bedeutung zukommt, wird ein Teilstrom des behandelten Abwassers (Leistungsteilstrom) von dem Ablauf abgezogen und in die Denitrifikationsstufe wieder eingeführt.

Zur Lösung des oben dargelegten technischen Problems lehrt die Erfindung weiterhin eine Anlage zur Reinigung von kommunal-gewerblichem Abwasser entsprechend dem unabhängigen Patentanspruch 4. Die biologisch intensivierte Filterstufe bzw. Filteranlage besteht vorzugsweise aus mindestens zwei Filterstufen, nämlich der vorgeschalteten Denitrifikationsstufe und zweckmäßigerweise einer nachgeschalteten Nitrifikationsstufe. Vorzugsweise weist die biologisch intensivierte Filteranlage eine dritte Filterstufe auf. Jede der Filterstufen kann aus einer oder mehreren Filtereinheiten bestehen. Zumindest die ersten beiden Filterstufen sind biologisch intensiviert. Alle Filterstufen können im Vollstrom oder im Teilstrom betrieben werden. Es liegt im Rahmen der Erfindung, daß die dritte Filterstufe als weitere Denitrifikationsstufe ausgeführt ist, zweckmäßigerweise wird dann eine externe Kohlenstoffquelle zudosiert. Die weitere Denitrifikationsstufe kann mit oder ohne Phosphorelimination betrieben werden. Es liegt auch im Rahmen der Erfindung, daß es sich bei der dritten Filterstufe um eine klassische Filtrationsstufe zur Suspensatentnahme, eine Mehrschicht-Filterstufe und dergleichen handelt. Weitere Beispiele hierfür sind kontinuierlich betriebene Filter mit interner Rückspülung, phasenweise rückgespülte Filter, Fließbettreaktoren mit/ohne Dosierung sowie optional interne oder externe Trägermaterialrückführung, Schwebebettreaktoren oder Aktivkohlefilter. In diesem Zusammenhang wird auf die Offenbarung von DE 39 16 679 A1 verwiesen. Als weitere Filtermaterialien kommen Kunststoffe, z.B. Styropor, zum Einsatz. Vor jeder Filterstufe und vor jeder einzelnen Filtereinheit kann eine zusätzliche Phosphor-Elimination mit Fällmitteln vorgesehen sein. Alle Filterstufen der biologisch intensivierten Filteranlage können entweder aufwärts oder abwärts durchströmt werden. Wird die erste Filterstufe aufwärts durchströmt, kann in einer frei wählbaren Höhe des Filterbetts Luftsauerstoff eingetragen werden, um die erste Filterstufe in einen unteren anoxischen Teil und einen oberen aeroben Teil zu unterteilen. Ebenso kann die zweite Filterstufe in einen unteren anoxischen Teil und einen oberen aeroben Teil unterteilt werden. Der Luftsauerstoff kann durch Reinsauerstoff angereichert werden oder ersetzt werden.

Nach bevorzugter Ausführungsform der Erfindung wird der Nitratstickstoff vom Ablauf der zweiten Filterstufe der biologisch intensivierten Filteranlage zur Denitrifikationsstufe rezirkuliert. Insoweit wird der im Abwasser enthaltene Kohlenstoff zur vorgeschalteten Denitrifikation genutzt und gleichzeitig wird der Kohlenstoff oxidiert.

Der Erfindung liegt die Erkenntnis zugrunde, daß durch die Kombination einer Hochlastbelebungsstufe (A-Stufe) mit in Strömungsrichtung anschließender biologisch intensivierter Filteranlage, die eine vorgeschaltete Denitrifikationsstufe aufweist, sehr gute Abwasserreinigungsleistungen erzielt werden. Diese erlauben im Vergleich zu gleich großen Belastungen von einstufigen Kläranlagen eine bemerkenswert hohe Raumeinsparung. Durch die erfindungsgemäße Anlage wird in erheblichem Maße Klärraum eingespart, da einerseits für die Elimination des Stickstoffes und des Phosphors sowie die Nitrifikation nur wenig Raum in Anspruch genommen wird und die Nachklärung entfällt. - Das in der Hochlastbelebungsstufe (A-Stufe) behandelte Abwasser weist eine hervorragende Abbaufähigkeit auf. Der verbleibende Kohlenstoff aus der A-Stufe ist für die nachgeschaltete Denitrifikation in der biologisch intensivierten Filterstufe besser verfügbar bzw. verwertbar, obwohl die Konzentration gegenüber einer klassischen Vorklärung nominell geringer ist. Die A-Stufe puffert Frachtschwankungen des zufließenden Abwassers sehr gut ab. Die erfindungsgemäß nachgeschaltete biologisch intensivierte Filteranlage bewirkt eine physikalisch/biologische Reinigung, eliminiert die in dem Ablauf aus der Hochlastbelebung noch enthaltene Kohlenstoffbelastung in der Denitrifikationsstufe durch die biologische Denitrifikation. In der zweiten Filterstufe wird die NH₄-N-Belastung durch Sauerstoffzufuhr eliminiert und nitrifiziert. Von besonderer Bedeutung ist, daß erfindungsgemäß gegenüber bekannten Kläranlagen eine erhebliche Verbesserung der Leistung der Nitrifikationsstufe erreicht wird, indem die Kombination aus vorgeschalteter Hochlastbelebungsstufe bzw. Adsorptionsstufe und vorgeschalteter Denitrifikationsstufe verwirklicht wird.

Zur Lösung des obengenannten technischen Problems ist weiterhin Gegenstand der Erfindung ein Verfahren zum Betrieb einer zweistufigen Reinigungsanlage für die Reinigung von kommunal-gewerblichem Abwasser mit Rohabwasser-Zulauf und Belebtschlammabzug, welche Reinigungsanlage
eine Adsorptionsstufe,
eine Zwischenklärstufe,
eine Festbettreaktorstufe mit vorgeschaltetem Festbett-Denitrifikationsreaktor und Festbett-Nitrifikationsreaktor mit Ablauf für das behandelte Abwasser aufweist,
wobei die vorgenannten Stufen über Leitungskanäle hintereinander geschaltet sind, - mit den Merkmalen
1.1) aus der Adsorptionsstufe und/oder der Zwischenklärstufe wird der Belebtschlamm abgezogen,
1.2) ein erster Teilstrom des behandelten Abwassers wird von dem Ablauf abgezogen und in die Festbett-Denitrifikationsstufe wieder eingeführt (Leistungsteilstrom),
1.3) ein zweiter Teilstrom des behandelten Abwassers wird von dem Ablauf abgezogen und in die Adsorptionsstufe wieder eingeführt (Denitrifikationsteilstrom),
wobei das Verhältnis zwischen dem Leistungsteilstrom einerseits und dem Denitrifikationsteilstrom andererseits so gewählt ist, daß in der Adsorptionsstufe 10% bis 50% des im zulaufenden Rohabwasser mitgeführten Stickstoffs abgebaut wird und die Denitrifikation im übrigen in dem Festbett-Denitrifikationsreaktor durchgeführt wird.

Es liegt im Rahmen der Erfindung, daß in der Adsorptionsstufe mehr als 10%, vorzugsweise 20% bis 30%, des im zulaufenden Rohabwasser mitgeführten Stickstoffs abgebaut werden. Nach bevorzugter Ausführungsform der Erfindung wird ein erster größerer Teilstrom von mehr als 50% des von dem Ablauf abgezogenen behandelten Abwassers als Leistungsteilstrom in die Festbett-Denitrifikationsstufe eingeführt und wird der Rest des abgezogenen Abwassers in die Adsorptionsstufe eingeführt. Vorzugsweise werden 75% des abgezogenen Abwassers in die Festbett-Denitrifikationsstufe eingeführt und 25% dieses Abwassers in die Adsorptionsstufe eingeführt. Es versteht sich, daß es sich bei den vorstehenden Prozentangaben um Gew.-% handelt. Der Leistungsteilstrom sowie der Denitrifikationsteilstrom können durch den gleichen Strömungskanal bis zur Abzweigung des Leistungsteilstromes geführt werden, wobei der Denitrifikationsteilstrom nach der Abzweigung zur Adsorptionsstufe weitergeführt wird. Es liegt aber auch im Rahmen der Erfindung, daß der Leistungsteilstrom einerseits und der Denitrifikationsteilstrom andererseits durch zwei getrennte Strömungskanäle in den Festbett-Denitrifikationsreaktor bzw. in die Adsorptionsstufe eingeführt werden.

Die Erfindung geht von der Erkenntnis aus, daß bei einer Anlage mit biologischer Hochlastbelebungsstufe und nachgeschalteter biologisch intensivierter Filterstufe bzw. Festbettreaktorstufe die Adsorptionsstufe in beachtlichem Maße an der Stickstoffreduktion teilnehmen kann, wenn ihr ausreichend Sauerstoff und Nitrat zur Verfügung gestellt wird. Die erreichte Verbesserung beruht darauf, daß eine vermehrte Reduktion des Stickstoffes in der Adsorptionsstufe eintritt, wenn ein Teilstrom des behandelten Abwassers der Adsorptionsstufe als Denitrifikationsteilstrom wieder zugeführt wird. Hierdurch wird der Nitratstickstoff bereits in der Adsorptionsstufe teilweise denitrifiziert. Der im Abwasser enthaltene Kohlenstoff wird zur Denitrifikation genutzt und gleichzeitig wird der Kohlenstoff oxidiert.

Die Erfindung nutzt die Tatsache, daß das aus der Adsorptionsstufe abfließende Abwasser biologisch leicht abbaubar ist. Der in der Adsorptionsstufe vorhandene Belebtschlamm ist hochaktiv und baut, so er Sauerstoffverbindungen vorfindet, diese Verbindungen rasch ab. Eine Entlastung des Denitrifikationsreaktors wird erreicht, weil erfindungsgemäß ein Teil des in der Nitrifikationsstufe behandelten Abwassers in die Adsorptionsstufe zurückgeführt wird. Das Maß der Überleitung kann in Abhängigkeit der Qualität und Quantität variiert werden. Bewährt hat es sich, etwa 25% dieses aus der Nitrifikationsstufe ablaufenden behandelten Abwassers in die Adsorptionsstufe wieder einzuführen. Hier erfolgt eine wirksame Denitrifikation, so daß für die restliche Denitrifikation nur noch eine wesentlich geringere $tickstoffmenge pro Liter bleibt. Die Voraussetzungen für eine bessere und stabilere Denitrifikation sind somit gegeben. Diese Verbesserung erfordert keinen zusätzlichen Raumbedarf für den Denitrifikationsreaktor, er kann vielmehr in bezug auf sein Volumen beachtlich verkleinert werden. Das ist überraschend und bedeutet eine beachtliche Ersparnis. Im Rahmen der Erfindung kann die Bemessung des Leistungsteilstromes der Festbettreaktorstufe optimiert werden. Durch Bemessung des Denitrifikationsteilstromes kann die Adsorptionsstufe in bezug auf die Stickstoff-Reduktion sehr weitgehend optimiert werden, ohne daß eine Beeinträchtigung der Funktion der Adsorptionsstufe in bezug auf den Adsorptionsvorgang in Kauf genommen werden müßte.
Gegenstand der Erfindung ist weiterhin eine Anlage für die Reinigung kommunal-gewerblicher Abwässer gemäß Patentanspruch 7.

Der erste Rückführkanal und der zweite Rückführkanal können bis zur Abzweigung des Leistungsteilstromes zu einem Leitungskanal zusammengefaßt werden. Es liegt aber auch im Rahmen der Erfindung zwei voneinander getrennte Rückführkanäle vorzusehen.

Im folgenden werden die beschriebenen und weiteren Merkmale der Erfindung anhand einer lediglich ein Ausführungsbeispiel darstellenden Zeichnung ausführlicher erläutert. Es zeigen in schematischer Darstellung:
- Fig. 1: eine erste Ausführungsform einer Anlage für die Reinigung kommunal-gewerblicher Abwässer, die nach dem erfindungsgemäßen Verfahren betrieben wird,
- Fig. 2: eine weitere Ausführungsform des Gegenstandes nach Fig. 1,
- Fig. 3: den Gegenstand der Fig. 2 detaillierter und in gegenüber Fig. 2 vergrößertem Maßstab.

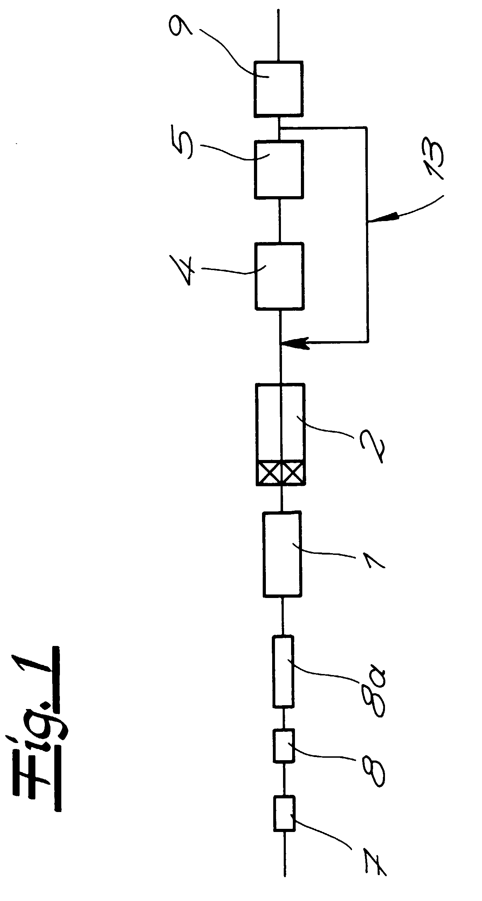

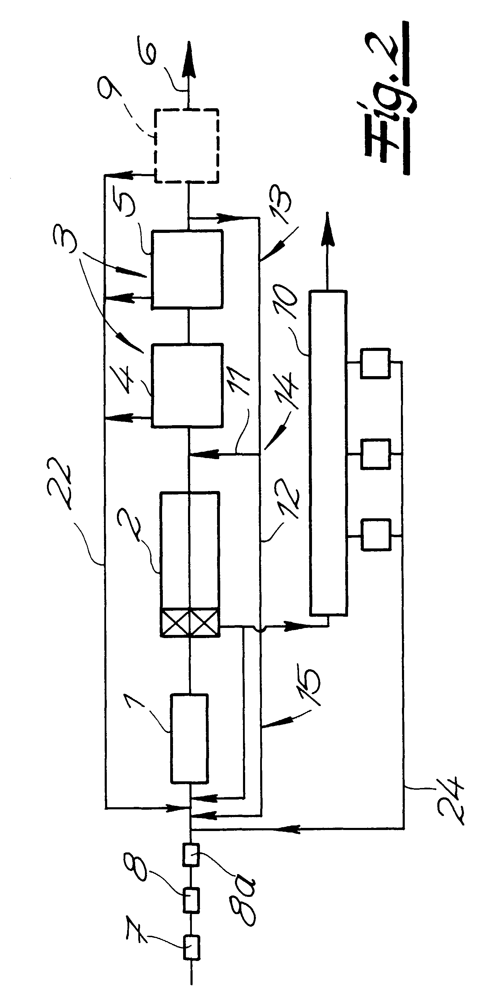

Fig. 1 zeigt eine vereinfachte Prinzipskizze einer erfindungsgemäßen zweistufigen Reinigungsanlage für die Reinigung von kommunal-gewerblichem Abwasser zur Durchführung des Verfahrens nach Patentanspruch 1. Die Anlage weist eine biologische Hochlastbelebungsstufe auf, die als Adsorptionsstufe 1 ausgeführt ist, wobei der Adsorptionsstufe 1 eine Zwischenklärstufe 2 nachgeschaltet ist. Der Adsorptionsstufe 1 ist im Ausführungsbeispiel nach Fig. 1 eine Grobreinigung 7 vorgeschaltet, die zweckmäßigerweise als Grobrechen ausgeführt ist und fernerhin eine Feinreinigung 8 vorgeschaltet, die zweckmäßigerweise als Feinrechen ausgeführt ist. Im Ausführungsbeispiel gemäß Fig. 1 ist der Adsorptionsstufe 1 außerdem ein Sand- und Fettfang 8a vorgeschaltet. Die erfindungsgemäße Anlage weist fernerhin eine biologisch intensivierte Filterstufe auf, die in Fig. 1 mit einer vorgeschalteten Denitrifikationsstufe 4 betrieben wird. Dieser Denitrifikationsstufe 4 ist eine Nitrifikationsstufe 5 als zweite Filterstufe nachgeschaltet. Nach dem Ausführungsbeispiel der Fig. 1 ist weiterhin eine dritte Filterstufe 9 vorgesehen, die für die Phosphatelimination eingesetzt werden kann. Es liegt aber auch im Rahmen der Erfindung, daß die dritte Filterstufe ebenfalls als Denitrifikationsstufe ausgeführt ist. In Fig. 1 ist erkennbar, daß ein Teilstrom des behandelten Abwassers von dem Ablauf der zweiten Filterstufe, im Ausführungsbeispiel der Nitrifikationsstufe 5 abgezogen und in die Denitrifikationsstufe 4 wieder eingeführt wird. Durch die erfindungsgemäße Kombination von biologischer Hochlastbelebungsstufe und nachgeschalteter biologisch intensivierter Filterstufe, die mit einer vorgeschalteten Denitrifikationsstufe arbeitet, wird insbesondere bei Rückführung des genannten Teilstromes des behandelten Abwassers in die Denitrifikationsstufe eine überraschend hohe Reinigungsleistung erzielt. Insgesamt kann der Raumbedarf der erfindungsgemäßen zweistufigen Reinigungsanlage gegenüber herkömmlichen Anlagen beachtlich reduziert werden. In Fig. 2 ist eine weitere Ausführungsform einer zweistufigen Reinigungsanlage für die Reinigung von kommunalgewerblichem Abwasser dargestellt, wobei Fig. 2 eine gegenüber Fig. 1 detailliertere Darstellung wiedergibt. Im Ausführungsbeispiel nach Fig. 2 ist die biologisch intensivierte Filterstufe als Festbettreaktorstufe 3 mit Denitrifikationsreaktor 4 und Nitrifikationsreaktor 5 mit Ablauf 6 für das behandelte Abwasser ausgeführt. Außerdem ist eine dritte Filterstufe 9 optional vorgesehen, die gestrichelt eingezeichnet wurde und im Ausführungsbeispiel nach Fig. 2 in Form eines weiteren Denitrifikationsreaktors verwirklicht ist.

Man entnimmt der Fig. 2, daß aus der Zwischenklärstufe 2 der Belebtschlamm abgezogen und der Belebtschlammbehandlung 10 zugeführt wird. Man erkennt fernerhin, daß ein erster Teilstrom 11 des behandelten Abwassers von dem Ablauf 6 abgezogen und in den Denitrifikationsreaktor 4 wieder eingeführt wird. Das ist der sogenannte Leistungsteilstrom. Ein zweiter Teilstrom 12 des behandelten Abwassers wird von dem Ablauf 6 abgezogen und in die Adsorptionsstufe 1 wieder eingeführt. Das ist der Denitrifikationsteilstrom. Das Verhältnis zwischen dem Leistungsteilstrom einerseits und dem Denitrifikationsteilstrom andererseits ist so gewählt, daß in der Adsorptionsstufe 1 bereits ein erheblicher Teil, vorzugsweise 10% bis 50% des im zulaufenden Rohabwasser mitgeführten Stickstoffes in der Adsorptionsstufe 1 abgebaut wird. Der Rest wird in dem Denitrifikationsreaktor 4 abgebaut. Man erkennt, daß im Ausführungsbeispiel nach Fig. 2 der Leistungsteilstrom sowie der Denitrifikationsteilstrom durch den gleichen Leitungskanal 13 bis zur Abzweigung 14 des Leistungsteilstromes geführt sind, während der Denitrifikationsteilstrom über die Leitung 15 weiter bis zur Adsorptionsstufe 1 geführt wird. Das behandelte Abwasser, daß der Adsorptionsstufe 1 wieder zugeführt wird, bringt in ausreichendem Maße gebundenen Sauerstoff mit, so daß die Voraussetzungen für eine erhebliche Denitrifikation in der Adsorptionsstufe 1 gegeben sind. Im Ergebnis führt dies dazu, daß der Denitrifikationsreaktor 4 verhältnismäßig klein bemessen werden kann.

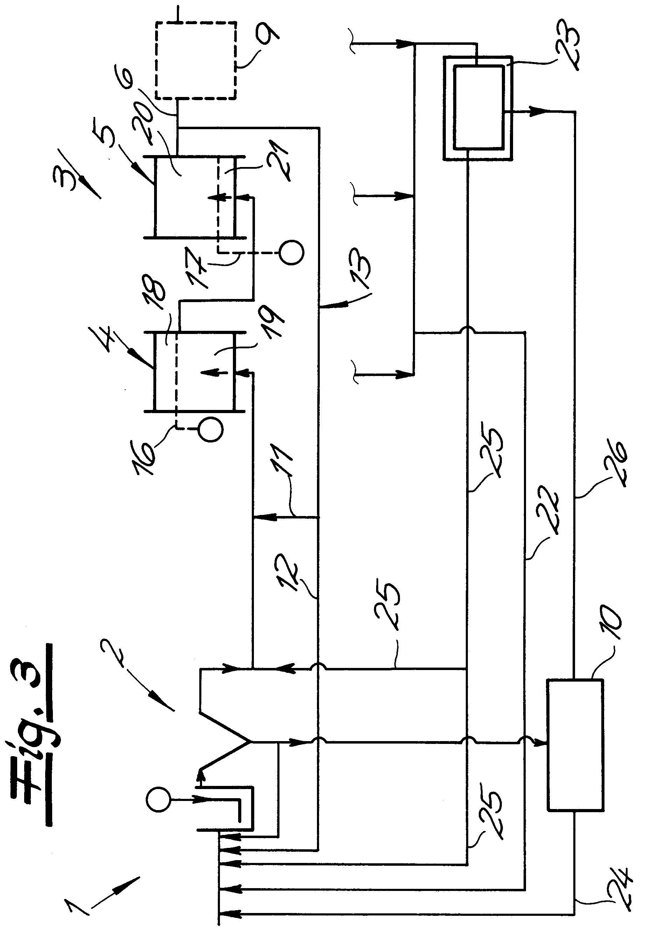

Es liegt im Rahmen der Erfindung, daß in der Adsorptionsstufe mit Luft oder Reinsauerstoff belüftet wird. Vorzugsweise werden Spülwässer, die bei der Filterspülung der Festbettreaktoren anfallen über eine Spülwasserleitung 22 in die Adsorptionsstufe 1 eingeführt. Es liegt jedoch auch im Rahmen der Erfindung, diese Spülwässer einer Spülwasserbehandlung 23 zuzuführen, was in Fig. 3 dargestellt ist. Zweckmäßigerweise werden die Prozeßwässer, die in der Belebtschlammbehandlung 10 anfallen, über eine Prozeßwasserleitung 24 wieder in die Adsorptionsstufe 1 eingeführt. Es liegt auch im Rahmen der Erfindung, daß aus der Zwischenklärstufe 2 abgezogener Belebtschlamm in die Adsorptionsstufe 1 rezirkuliert werden kann. Grundsätzlich ist es im Rahmen der Erfindung möglich, daß vor jeder Reinigungsstufe eine Phosphorelimination mit Hilfe eines Fällmittels erfolgen kann. Wenn gemäß Ausführungsbeispiel nach den Fig. 2 und 3 die dritte Filterstufe 9 als Denitrifikationsreaktor ausgeführt ist, wird hier zweckmäßigerweise Kohlenstoff zudosiert, da der aus der Adsorptionsstufe 1 ablaufende Kohlenstoffgehalt bereits zum großen Teil in der ersten Filterstufe bzw. in dem vorgeschalteten Denitrifikationsreaktor 4 verbraucht wird. Es liegt aber auch im Rahmen der Erfindung daß in dem Denitrifikationsreaktor 4 Kohlenstoff zudosiert wird, falls die Ablaufkonzentration aus der Adsorptionsstufe relativ gering sein sollte.

In Fig. 3 ist in gegenüber Fig. 2 vergrößertem Maßstab die erfindungsgemäße zweistufige Reinigungsanlage dargestellt. Die Festbettreaktorstufe 3 wirkt als biologisch intensivierte Filteranlage und bewirkt eine physikalisch/biologische Reinigung. Der Denitrifikationsreaktor 4 bildet hierbei die erste Filterstufe und der Nitrifikationsreaktor 5 bildet die zweite Filterstufe. Im Ausführungsbeispiel nach den Fig. 2 und 3 ist eine dritte Filterstufe für eine nachgeschaltete Denitrifikation vorgesehen, wozu zweckmäßigerweise eine externe Kohlenstoffquelle an die dritte Filterstufe angeschlossen ist. Jede Filterstufe kann aus einer oder aus mehreren Filtereinheiten bestehen. Die im Zulauf des Denitrifikationsreaktors 4 noch enthaltene Kohlenstoffbelastung wird im Denitrifikationsreaktor 4 durch biologische Denitrifikation abgebaut und gleichzeitig wird der Nitratstickstoff denitrifiziert. In dem Nitrifkationsreaktor 5 wird die noch vorhandene Kohlenstoffbelastung durch Sauerstoffzufuhr eliminiert und zugleich wird Ammonium nitrifiziert. Im Ausführungsbeispiel nach Fig. 3 wird das behandelte Abwasser wie oben bereits erläutert von dem Ablauf 6 über den Leitungskanal 13 abgezogen. Ein erster Teilstrom 11 wird dem Denitrifikationsreaktor 4 wieder zugeführt und ein zweiter Teilstrom 12 wird der Adsorptionsstufe 1 wieder zugeführt. Die mengenmäßige Aufteilung der beiden Teilströme ist grundsätzlich in verschiedenen Verhältnissen möglich. In der Adsorptionsstufe 1 und im Denitrifikationsreaktor 4 kann der im Abwasser enthaltene Kohlenstoff zur Denitrifikation genutzt werden und gleichzeitig dabei der Kohlenstoff oxidiert werden. - Der Denitrifikationsreaktor 4 und der Nitrifikationsreaktor 5 können entweder von oben nach unten oder von unten nach oben durchströmt werden. Im Ausführungsbeispiel nach Fig. 3 werden sowohl der Denitrifikationsreaktor 4 als auch der Nitrifikationsreaktor 5 von unten nach oben durchströmt, was in Fig. 3 durch Pfeile verdeutlicht wurde. Vorzugsweise wird in einer wählbaren Höhe des Filterbetts bzw. Reaktorbetts jeweils Luftsauerstoff über eine Zuführung 16, 17 eingeführt. Der Luftsauerstoff kann durch Reinsauerstoff angereichert oder ersetzt werden. Im Ausführungsbeispiel nach Fig. 3 wird in die erste, von dem Abwasser aufwärts durchströmte Filterstufe Luftsauerstoff über die Zuführung 16 im oberen Bereich des Filterbetts eingeführt. Dadurch weist die erste Filterstufe einen oberen aeroben Teil 18 und einen unteren anoxischen Teil 19 auf. Im Ausführungsbeispiel nach Fig. 3 wird im unteren Bereich der zweiten Filterstufe Luftsauerstoff über die Zuführung 17 eingeführt. Hierdurch wird die zweite Filterstufe in einen oberen aeroben Abschnitt 20 und einen unteren anoxischen Abschnitt 21 unterteilt.

In Fig. 3 ist erkennbar, daß das Spülabwasser aus den Festbettreaktoren 4, 5, 9 in die Adsorptionsstufe 1 über eine Spülwasserleitung 22 eingeführt werden kann. Es liegt auch im Rahmen der Erfindung, dieses Spülwasser der Spülwasserbehandlung 23 zuzuführen und das gereinigte Spülwasser über Leitungen 25 in die Adsorptionsstufe 1 einzuführen und/oder in die erste Filterstufe bzw. in den Denitrifikationsreaktor 4 einzuführen. Der in der Spülwasserbehandlung 23 anfallende Überschußschlamm wird zweckmäßigerweise der Belebtschlammbehandlung 10 mittels der Überschußschlammleitung 26 zugeführt. Das dabei anfallende Prozeßwasser kann über die Prozeßwasserleitung 24 in die Adsorptionsstufe eingeführt werden. Es liegt aber auch im Rahmen der Erfindung, den in der Spülwasserbehandlung 23 anfallenden Überschußschlamm separat zu behandeln, so daß hier keine Rezirkulierung in die Adsorptionsstufe 1 stattfindet. Das aus der Festbettreaktorstufe 3 abgezogene Spülwasser kann auch völlig separat behandelt werden, ohne daß irgendeine Rückführung bzw. Rezirkulierung in die Adsorptionsstufe oder die erste Filterstufe bzw. den Denitrifikationsreaktor 4 stattfindet.

Durch die erfindungsgemäße Rückführung eines Teils des biologisch bereits gereinigten Abwassers aus dem Ablauf 6 in die Adsorptionsstufe 1 wird eine beachtliche Verkleinerung der Festbettreaktorstufe 3, insbesondere des Denitrifikationsreaktors 4, bei gleicher Leistung im Vergleich zu herkömmlichen Anlagen möglich. Die hierdurch erzielte Raumeinsparung beträgt gegenüber herkömmlichen Anlagen beispielsweise 25%. Mit anderen Worten wird durch die Rückführung eines Teils des Abwassers in die Adsorptionsstufe 1 eine beachtliche Entlastung des Denitrifikationsreaktors 4 erzielt. In der Adsorptionsstufe wird bereits eine Verringerung des Stickstoffgehaltes um 20% bis 28%, im Mittel 23%, erreicht. Dagegen wird in der Vorklärung von bekannten einstufigen Belebungsanlagen lediglich eine Stickstoffreduzierung bis etwa 10% erzielt. Im übrigen ist bei der erfindungsgemäßen Reinigungsanlage der BSB₅- und CSB-Abbau gegenüber einer Vorklärung in einer üblichen einstufigen Reinigungsanlage mit 50% bis 60% gegenüber 30% praktisch doppelt so hoch. Bei der erfindungsgemäßen Reinigungsanlage wird durch die Kombination von vorgeschalteter Adsorptionsstufe und vorgeschaltetem Denitrifikationsreaktor in der biologisch intensivierten Filterstufe eine erhebliche Verbesserung der NH₄-N-Raumumsatzleistung des Nitrifikationsreaktors erreicht.

Im folgenden wird die Erfindung durch ein Ausführungsbeispiel, welches erkennen läßt, was das erfindungsgemäße Betriebsverfahren in bezug auf die Leistungserhöhung in der Festbettreaktorstufe, genauer in dem Denitrifikationsreaktor, und außerdem in bezug auf die Denitrifikation erreicht:

### Ausführungsbeispiel

Es wird eine Kläranlage gemäß Fig. 2 und gemäß obiger Figurenbeschreibung zur Fig. 2 eingesetzt, die eine Adsorptionsstufe, eine Zwischenklärstufe, eine Festbettreaktorstufe mit Denitrifikationsreaktor und nachgeschaltetem Nitrifikationsreaktor sowie eine Phosphoreliminationsstufe aufweist. Die Kläranlage ist für einen Anschlußwert von 100.000 Einwohnergleichwerten (EW) bemessen. Außerdem weist die Kläranlage die folgenden Bemessungsdaten auf:
- Tageswassermenge (Qₜᵣ): Q_{d,tr} = 20.000m³/d
- Spitzenbelastung bei Trockenwetter: Q_{tr'h} = Q_{d'E}/16 = 1.250 m³/h
- Spitzenbelastung bei Regen: Qᵣ = 2.500 m³/h

Im Rahmen des Ausführungsbeispiels wird ein übliches kommunales Abwasser mit normaler Belastung eingesetzt. - Die Anlage wird zunächst mit einer Rückführung des ersten Teilstromes (Leistungsteilstrom) des behandelten Abwassers in den Denitrifikationsreaktor gefahren aber ohne Rückführung des zweiten Teilstromes (Denitrifikationsteilstrom) in die Adsorptionsstufe. Das Volumen der Adsorptionsstufe beträgt 750 m³. Die BSB₅ Reinigungsleistung der Adsorptionsstufe beträgt 55% bei einem Sauerstoffgehalt von ≥ 0,2 mg/l. Hinsichtlich der biologischen Belastung weist die Adsorptionsstufe einen BSB₅-Zulauf von 6.000 kg BSB₅/d auf. Die Raumbelastung der Adsorptionsstufe beträgt 8 kg BSB₅/m³ d. Die Biomasse im Belebungsbecken der Adsorptionsstufe weist einen Wert von 2 kg TS/m₃ auf (TS- Trockensubstanz). Die Schlammbelastung der Adsorptionsstufe beträgt 4 kg BSB₅/kg TS.

Das Volumen der Zwischenklärstufe weist einen Wert von 1.875 m³ auf und der Ablauf aus der Zwischenklärstufe zur Festbettreaktorstufe beträgt im Mittel 137,5 mg BSB₅/l.

In der Adsorptionsstufe wird eine Stickstoffreduktion von 23% erreicht. Die zu denitrifizierende Stickstofffracht beträgt insgesamt N_{D} = 33 mg/l. Die Denitrifikation dieser Stickstofffracht findet im Denitrifikationsreaktor statt. Hierzu ist ein Volumen des Denitrifikationsreaktors von 1.100 m³ erforderlich. Insoweit ergibt sich bezüglich des Zulaufs zum Denitrifikationsreaktor ein BSB₅/N_{D}-Wert von 4,1.

Eine Entlastung des Denitrifikationsreaktors wird erreicht, wenn ein Teilstrom des in der Festbettreaktorstufe behandelten Abwassers von dem Ablauf des Nitrifikationsreaktors der Festbettreaktorstufe abgezogen und in die Adsorptionsstufe eingeführt wird. Werden 25% dieses behandelten Abwassers in die Adsorptionsstufe eingeführt, so findet eine beachtliche Denitrifikation bereits in der Adsorptionsstufe statt. Auf diese Weise können in der Adsorptionsstufe bereits 8,3 mg N/l denitrifiziert werden, so daß von den 33 mg N/l lediglich 24,8 mg N/l für die Denitrifikation in dem Denitrifikationsreaktor verbleiben. Dementsprechend kann der Denitrifikationsreaktor wesentlich kleiner ausgeführt werden und im Ergebnis um 25% seines Volumens verkleinert werden. Werden nach dem erfindungsgemäßen Verfahren 25% des behandelten Abwassers der Adsorptionsstufe zugeführt, so beträgt das erforderliche Volumen des Denitrifikationsreaktors lediglich 833 m³. Der BSB₅/N_{D}-Wert bezüglich des Zulaufs zum Denitrifikationsreaktor verbessert sich von 4,1 auf 5,5.

## Patentansprüche

1. Verfahren zum Betrieb einer zweistufigen Reinigungsanlage für die Reinigung von kommunal-gewerblichem Abwasser mit Rohabwasser-Zulauf und Belebtschlammabzug, welche Reinigungsanlage eine biologische Hochlastbelebungsstufe und eine nachgeschaltete biologisch intensivierte Filterstufe sowie einen Ablauf für das behandelte Abwasser aufweist, wobei die biologisch intensivierte Filterstufe mit einer vorgeschalteten Denitrifikationsstufe betrieben wird.

2. Verfahren nach Anspruch 1, wobei die biologisch intensivierte Filterstufe mit einer der Denitrifikationsstufe nachgeschalteten Nitrifikationsstufe betrieben wird.

3. Verfahren nach einem der Ansprüche 1 oder 2, wobei ein Teilstrom des behandelten Abwassers von dem Ablauf abgezogen und in die Denitrifikationsstufe wieder eingeführt wird.

4. Anlage zur Reinigung von kommunal-gewerblichem Abwasser zur Durchführung des Verfahrens nach einem der Ansprüche 1 bis 3, - mit
Adsorptionsstufe (1), Zwischenklärstufe (2) und Festbettreaktorstufe (3) mit vorgeschaltetem Denitrifikationsreaktor (4) und Nitrifikationsreaktor (5), die über Leitungskanäle hintereinander geschaltet sind,
wobei an die Zwischenklärstufe (2) ein Belebtschlammabzug angeschlossen ist, der zur Belebtschlammbehandlung (10) führt und wobei das Abwasser über einen Ablaufkanal abläuft, wobei ein Rückführkanal für einen Teilstrom (11) des behandelten Abwassers vorgesehen ist, welcher Teilstrom (11) in den Denitrifikationsreaktor (4) einführbar ist.

5. Verfahren zum Betrieb einer zweistufigen Reinigungsanlage für die Reinigung von kommunal-gewerblichem Abwasser mit Rohabwasser-Zulauf und Belebtschlammabzug, welche Reinigungsanlage
eine Adsorptionsstufe,
eine Zwischenklärstufe,
eine Festbettreaktorstufe mit vorgeschaltetem Festbett-Denitrifikationsreaktor und Festbett-Nitrifikationsreaktor mit Ablauf für das behandelte Abwasser aufweist,
wobei die vorgenannten Stufen über Leitungskanäle hintereinander geschaltet sind, - mit den Merkmalen
1.1) aus der Adsorptionsstufe und/oder der Zwischenklärstufe wird der Belebtschlamm abgezogen,
1.2) ein erster Teilstrom des behandelten Abwassers wird von dem Ablauf abgezogen und in die Festbett-Denitrifikationsstufe wieder eingeführt (Leistungsteilstrom),
1.3) ein zweiter Teilstrom des behandelten Abwassers wird von dem Ablauf abgezogen und in die Adsorptionsstufe wieder eingeführt (Denitrifikationsteilstrom),
wobei das Verhältnis zwischen dem Leistungsteilstrom einerseits und dem Denitrifikationsteilstrom andererseits so gewählt ist, daß in der Adsorptionsstufe 10% bis 50% des im zulaufenden Rohabwasser mitgeführten Stickstoffs abgebaut wird und die Denitrifikation im übrigen in dem Festbett-Denitrifikationsreaktor durchgeführt wird.

6. Verfahren nach Anspruch 5, wobei der Leistungsteilstrom sowie der Denitrifikationsteilstrom durch den gleichen Strömungskanal bis zur Abzweigung des Leistungsteilstromes geführt und der Denitrifikationsteilstrom nach der Abzweigung der Adsorptionsstufe zugeführt wird.

7. Anlage für die Reinigung von kommunal-gewerblichem Abwasser mit Adsorptionsstufe (1), Zwischenklärstufe (2), Festbettreaktorstufe (3) mit vorgeschaltetem Festbett-Denitrifikationsreaktor (4) und Festbett-Nitrifikationsreaktor (5), die über Leitungskanäle hintereinander geschaltet sind, wobei an die Adsorptionsstufe (1) und/oder die Zwischenklärstufe (2) ein Belebtschlammabzug angeschlossen ist, der zur Belebtschlammbehandlung (10) führt, und wobei das Abwasser über einen Ablaufkanal abläuft, mit
einem ersten Rückführkanal für einen ersten Teilstrom (11) des behandelten Abwassers der als Leistungsteilstrom in den Festbett-Denitrifikationsreaktor (4) einführbar ist,
einem zweiten Rückführkanal für einen zweiten Teilstrom (12) des behandelten Abwassers, der als Denitrifikationsteilstrom in die Adsorptionsstufe (1) einführbar ist, wobei die Mengenströme des Leistungsteilstromes einerseits und des Denitrifikationsteilstromes andererseits steuerbar und/oder regelbar sind.

8. Anlage nach Anspruch 7, wobei der erste Rückführkanal und der zweite Rückführkanal bis zur Abzweigung (14) des Leistungsteilstromes zu einem Leitungskanal (13) zusammengefaßt sind.
